# EUROPEAN PATENT SPECIFICATION

(11) **EP 0 608 257 B1**
(45) Date of publication and mention of the grant of the patent: **24.04.1996**
(21) Application number: 92919750.7
(22) Date of filing: 21.08.1992
(51) Int. Cl.: B09B 3/00

(54) **METHOD OF VITRIFICATION OF DUSTY WASTE, ESPECIALLY OF FLY ASH FROM THE INCINERATORS**
VERFAHREN ZUM VERGLASEN VON STAUBIGEN ABFAELLEN, INSBESONDERE VON FLUGASCHE AUS MÜLLVERBRENNUNGSANLAGEN
PROCEDE DE VITRIFICATION DE DECHETS PULVERULENTS, NOTAMMENT LA SUIE DES INCINERATEURS

(30) Priority: 23.09.1991 CS 2916/91
(43) Date of publication of application: 03.08.1994
(73) Proprietor: Inglas s.r.o., CZ-100 00 Praha 10 (CZ)
(72) Inventor: VLCEK,Pavel, 473 01 Novy Bor (CS); SCHOVANKA, Frantisek, 473 01 Novy Bor (CS); SUVOVA , Hana, 470 01 Ceska Lipa (CS); SACHA, Jaroslav, 470 01 Ceska Lipa (CS)
(74) Representative: White, William
(86) International application number: CS9200025
(87) International publication number: WO9305894

(56) References cited:
- EP-A- 0 335 033
- EP-A- 0 359 003
- EP-A- 0 437 679
- WO-A-90/09211
- DE-C- 3 841 918

## Description

### Technical Field

This invention relates to the method of vitrification of dusty waste, especially of fly ash from the incinerators for municipal wastes containing a high amount of sulphur compounds, organic matters and heavy metals. This dusty waste is mixed with meltable constituents of the glass batch that is melted in the glass melting all-electric furnace to obtain the molten glass. During the melting a cold non-molten layer of glass batch is maintained on the surface of molten glass. The molten glass is drained through the outlet channel in the bottom or close to the bottom of the electric furnace, the molten glass being heated up immediately before the outlet channel by the additional electric heating. The molten glass is processed to the glassy mass with the ability to be normally stored or further utilized.

### Background Art

The trend to the environmental protection being applied to date tends to the waste processing in order to acquire substances as inert as possible. One of the fields being considered is the disposal of dusty waste from the incinerators, especially of fly ash being collected in the electrostatic filtres which contains harmful substances, above all heavy metals, harmful organic substances, sulphur, etc. A number of disposal methods of fly ash have been published in the literature: one of them is the vitrification. The final product of vitrification is the glass mass which is resistant, features a very low extractiveness along with the ability to bind a lot of harmful substances in its structure. Moreover, when comparing with the initial raw material the volume of such glassy mass will be considerably reduced. The waste processed by the vitrification can be deposited in common tips, and if needed, it can be utilized as a secondary raw material.

The vitrification of waste is described e.g. in European patent No. 359 003, in BRD patent No. 38 41 889 and in BRD patent application No. 39 04 613. In these inventions the method of vitrification is presented and in some cases the equipment used to the realization of the corresponding method. The method presented is based on the preparation of a mixture of fly ash with one or more meltable additives such as sand, sodium, phonolite, dolomite, limestone etc. The glass batch composed in such a way is processed into molten glass, from the smaller part the waste gas is generated which is led back to the said batch where it is cooled under the condensing temperature of heavy metals and their compounds: in consequence of that, the content of these harmful substance in the waste gas is substantially reduced. The cooled waste gas is purified by known methods. The dust being separated from the waste gas during purification is returned to the melting process. For example, in the patent application BRD No. 39 04 613 it is disclosed that after separation of dust the waste gas is purified by a wet process or sludge can be recycled into the batch similarly as the dust. After purification, the waste gas is led through the active coal filter and at the outlet of this filtration the gas features such a cleanliness that it can be emitted directly into atmosphere without causing any contamination of the environment.

In the European patent No. 359 003 and BRD patent application No. 39 04 613 it is disclosed that a certain amount of molten glass surface is maintained without a layer of glass batch and besides the molten glass a layer of alkali or alkaline earth-sulphate foam is produced that is maintained on the molten glass surface with a thickness of 20 to 50 mm. Thus, the furnace for melting such wastes must be equipped with an opening in the height of the sulphate foam layer to enable the draining-off this sulphate foam during the melting process. The sulphate foam is composed of salts whose limit of solubility is exceeded during the melting. In the both patents cited the controlled keeping of the sulphate foam is assumed. This method of control of the melting process is very demanding concerning the qualification of operators with regard to the need that considerable variation of the composition of input raw materials must be followed. The rise of sulphate foam and creation of sulphate pools can lead to the lost of insulating effect and to the lowering of the melting performance. Because the sulphates are highly corrosive and they have a low viscosity, the penetration of these compounds even to the narrowest joints of refractory lining can occur with the consequent drop of the furnace life. Also, the handling is dangerous when draining the sulphate foam because considerable contraction arises by chilling and by contact with a cold body, the large quantity of heat is leed away and the sulphate squirts.

An equipment designed to the vitrification of waste is specified in BRD patent No. 38 41 9128. It is a glass melting furnace, fully electric one, e.g. heated by vertical electrodes extending from above and dipped into the molten glass. The furnace comprises a melting end and a separated working end in which a curtain wall is placed. Between the first and second curtain walls, the closable outlet for the sulphate foam is situated whose lower edge extends above the level of molten glass, the position of the opening itself corresponds with the level of the sulphate foam. The first separating wall between the melting and working ends extends to the level of the molten glass only and can be advantageously vertically adjusted. The overflow edge is covered by an electrically conductive material and can be heated up. The melting agents are added to the waste and they amount to 30 % of maximum content in the glass batch.

From these furnaces the molten glass is drained by means of various types of outflow channels that are situated directly in the bottom or close to it, by means of overflow, etc., and the cooled glassy mass is processed by using routine methods to produce fritted glass, pellets, fibres, etc., which are deponable in common tips or can be utilized in various consequent technological processes.

When using the current methods of fly ash vitrification the sulphur included passes mostly to the sulphate foam, the organic matter mineralizes and their carbon matter passes to a great extent into the waste gas. The major product of the vitrification is glass so that the release of metals band further substances contained in the glass is reduced to a minimum. The disadvantage of the above-mentioned even if sometimes very progressive solutions of the vitrification of dusty fly ash types with high content of sulphur is the controlled layer of the sulphate foam being maintained above the level of the molten glass, often with at least partly uncovered surface of the molten glass which means very difficult melting when taking the corrosiveness of sulphates into account.

The advantage of a layer of foam being maintained above the surface of the molten glass for catching a part of harmful substances could be regarded as disputable because the problem of the disposal of harmful substances is simply transferred from the sphere of gas purification to the sphere of disposal only of the soluble waste. The recycling of this foam to the melting process is questionable especially with the high content of sulphur: e.g. the incineration waste contains up to 20% by weight of sulphur. In the present solutions the process of gas purification is also very demanding namely in the solutions where the partly opened surface of molten glass is presumed and where large quantities of waste gases occur.

The vitreous glass mass was produced that was tested concerning the extractiveness and toxical harmlessness for the deposits on usual tips or for the further industrial utilisation. The values of extractiveness and harmlessness fulfil the desired requirements.

### Disclosure of the Invention

According to this invention the disadvantages of the vitrification of dusty waste mentioned above are eliminated or substantially reduced by using the method in which the dusty waste, especially fly ash from the incinerator for municipal wastes with a high amount of sulphur compounds, organic matter and heavy metals is mixed with meltable components into a glass batch, which is processed in an all-electric glass furnace to obtain molten glass while maintaining a cold non-molten layer of glass batch on the surface of molten glass during melting and the molten glass is discharged through an outlet channel in the bottom or alternatively close to the bottom of the furnace, with heating of the molten glass at the bottom before the outlet channel by means of additional electric heating. According to this invention the method consists of the reduction of sulphur compounds underneath the cold non-molten layer of the glass batch being maintained on the surface of the molten glass to the lowest stage of oxidation in the considerably reducing medium by adding the reducing components into the glass batch and/or by the melting temperature in the molten glass being kept on a minimum of 1420 °C.

The major advantage of this solution is the elimination of the sulphate foam formation, the increase of the amount of sulphur compounds in the glass product and the limitation of the rise of harmful substances in waste gases along with the reduction of leakage of the heavy metal products. The final product of vitrification is partly the solid non-extractible product, namely the glassy phase along with the segregated phase of metal sulphides and reduced elementar metals, partly the gaseous phase, namely waste gas, having minimum content of harmful compounds. The considerably reducing medium with the lowered partial pressure will be reached during the melting by adding the reducing components into the glass batch which contribute to the reduction of sulphates and/or by the melting temperature of at least 1420 °C, which accelerates the thermal decomposition of sulphate sulphur and carbon from the organic compounds. Organic compounds in the batch are reduced to carbon at high temperature and carbon can serve as a reducing component. In the considerably reducing medium the elementar metals are bound chemically to the metal sulphides and are reduced as a segregated phase. During the melting the contingently reduced heavy metals and iron can be concentrated in the reducing medium at the bottom of the furnace or immediately before the outlet channel so that here the molten glass with low heat conductivity rises whose difficult melting will be supported by the additional electric heating. The additional electric heating is helpful in mixing-up the segregated phase of metal sulphides and elementar metals with the glass melt and is used for heating-up the glass melt, which is difficult to melt for enabling its easier discharging together with segregated phase through the outlet channel.

### Example of Carrying out Invention

During incineration of municipal wastes the dusty fly ash is collected on the electrostatic filtres installed for the purification of gases, said fly ash representing the harmful waste. Its composition ranges e.g. in the following limits, from 35 to 50% by weight of silica dioxide, from 7 to 18% by weight of oxides of alkali metals, from 6 to 14% by weight of oxides of alkali earth metals, from 8 to 15% by weight of alumina oxide, from 2 to 5% by weight of iron oxides, from 7 to 15% by weight of sulphur oxides, from 4 to 6% by weight of carbon in organic compounds. The fly ash further contains copper, cobalt, cadmium, niobium, lead, zinc, chromium, manganese, fluorides and chlorides. For the purpose of vitrification, e.g. three parts of this fly ash is mixed with one part of the meltable constituent which is represented by non-regenerable cullet of amber glass that contains also the reducing compounds, namely bivalent iron and sulphides. Concerning the meltable components being added to the glass batch it is favourable to choose their type, composition and quantity according to the initial composition of the waste which varies considerably especially in fly ash types. Concerning the reducing components, it is also favourable to consider the waste composition. For the chemical reduction, it can be used e.g. soot, furnace slag with reducing ability etc.

In such a way prepared glass batch is charged into the fully electric glass furnace in which it is melted at the temperature of appr. 1460 °C with the covered surface of molten glass where the layer of non-molten glass batch will be maintained. During the reducing melting the slag and athermanous molten glass which is melted with difficulty sinks to the bottom of the furnace which contains alternatively also reduced heavy metals and sulphidic sulphur so that this molten glass at the bottom of the furnace and immediately before the outlet channel will be heated-up by the additional electric heating which also positively affects its homogenization.

In order to create the optimal reducing medium, the combination of reducing means should be advantageously chosen, i.e. both the reducing components in the glass batch and reducing action of the temperature value in the molten glass. The reducing means must be able to reduce the whole quantity of sulphur contained in the molten glass so that the danger of foamed surface of the molten glass is avoided. For example, in case that only the reducing component in the glass batch along with low melting temperatures are used, the sulphate foam can be formed with its consequent solidification and the melting output is lowered. On the contrary, under too high melting temperatures in the molten glass and lack of reducing component in the glass batch, a reducing atmosphere may be formed above the glass batch, which is not able to influence the sulphate foam forming between the surface of the molten glass and the glass batch. The melting temperatures must be sufficiently high, at least 1420 °C, in order to maintain the reducing atmosphere in the furnace. With the rise of temperature the effect of elimination of the sulphate foam on the surface of the molten glass will increase but at the same time the requirements on the quality of refractory material of the furnace lining will be higher. The highest melting temperature is given substantially by the corrosion of refractory material of the lining.

The fly ashes from the incinerators contain a considerable amount of organic matter which will be decomposed at the melting temperatures of the glass, and the reducing medium creates further reducing components that affect the conditions in the molten glass.

By controlling the melting process according to this invention, the layer of sulphate foam will not be formed on the surface of the molten glass and the surface of the molten glass is covered by a layer of the glass batch. The sulphate foam from the fly ash is converted during vitrification in reducing medium to the lower oxidation stages of sulphur, up to the sulphidic sulphur, possible in the segregated phase in the molten glass. The cold non molten layer of the glass batch which is maintained on the surface of the molten glass prevents the products of heavy metal to be leaked into atmosphere and in this way the content of harmful substances in the waste gas is lowered. The waste gases are exhausted out of the furnace and if necessary they will be purified by known methods, e.g. by a wet process. The products of purification along with the collected dust on the separator can be recycled into glass batch. The purified waste gases can be emitted into atmosphere without danger.

For this method of vitrification the single chamber continuous glass melting furnace has been well proved. It is heated by electrodes spaced horizontally in side walls of the furnace and submerged in the surface of the molten glass. The exhaust channel for waste gases is situated in the crown of the furnace. The bottom of the furnace is inclined and the outlet channel for the drainage of the molten glass is situated either in the middle of the bottom which is roof-shaped to the control axis or it is situated in the face of the furnace to which the bottom is uniformly inclined. The inclined bottom supports the flowing off the athermanous molten glass or slag. If the inclined bottom is not used, drains, channels etc. can be formed. Immediately before the outlet channel, the additional electric heating is placed with horizontally spaced electrodes.

Against the highly corrosive molten glass the heating electrodes can be protected by introducing low-frequency electric current. The stability and proper control of the melting process in the furnace can be maintained in such a way that in each horizontal electrode a constant intensity of current and at the same time a constant power input is being kept.

After converting the fly ash into the molten mass, the molten glass is drained via the outlet channel, and cooled, and the glass product obtained is processed e.g. to the hemi-sphere spaced pellets which can be used as a filling matter in the civil engineering, in the road building or can be deposited in common tips.

### Industrial Applicability

By means of vitrification the unstable and in most cases dusty and toxic wastes with a high content of sulphur, organic matter and heavy metals is converted into a glassy mass which is normally storable or in a secondary way utilizable, e.g. in the civil engineering.

## Claims

1. Method of vitrification of dusty waste, especially of fly ash from the incinerators for municipal waste, containing compounds with a high amount of sulphur, organic matter and heavy metals, in which the waste is mixed with meltable components into a glass batch which is processed in an all-electric glass furnace to molten glass while maintaining a cold non-molten layer of glass batch on the surface of molten glass during melting and the molten glass is discharged through an outlet channel in the bottom or close to the bottom of the furnace, with heating of the molten glass at the bottom before the outlet channel by means of additional electric heating, and is converted into a glass mass which is normally storable or further utilizable, **characterized by** carrying out the reduction of sulphur compounds underneath the cold non-molten layer of glass batch to the lowest oxidation stage in the considerably reducing medium by adding reducing components into the glass batch and/or by controlling the melting temperature in the molten glass at a temperature of at least 1420°C.

## Patentansprüche

1. Methode der Vitrifikation von Staubfällen, vor allem von Flugasche aus den Verbrennungsanlagen kommunaler Abfälle, die Verbindungen mit hohem Gehalt an Schwefel, organischen Stoffen Schwermetallen enthalten, wobei der Abfall mit schmelzbaren Zusätzen in das Glasgemenge eingemischt wird, das im 30 Elektroschmelzofen zu Glasmasse geschmolzen wird, während des Schmelzvorgangs hält sich auf dem Glasspiegel der Glasmasse eine ungeschmolzene Gemengeschicht, die geschmolzene Glasmasse wird über einen Ausfluß im Boden oder in unmittelbarer Nähe des Ofenbodens ausgelassen, wobei die Glasmasse vor dem Ausfluß mit einer Elektrozusatzheizung aufgeheizt wird, und nachfolgend wird sie einen lagerfähigen oder weiter einsetzbaren Glasstoff überführt,
**dadurch gekennzeichnet**,
daß die Schwefelverbindungen unter der kalten ungeschmolzenen Gemengeschicht einer Reduktion zu Schwefel und/oder Sulfiden Reduktionskomponenten unterliegen, die dem Gemenge beigefügt sind, und/oder durch eine Schmelztemperatur von wenigstens 1420 °C.

## Revendications

1. Il s'agit du procédé de vitrification des déchets en poudre, notamment des cendres volantes, provenant des stations d'incinération des ordures communales, qui ont une forte 15 teneur de soufre, de substances organiques et de métaux lourds, procédé au cours duquel les déchets se mélangent aux additions fusibles dans la composition vitrifiable qui est fondue dans le four électrique pour donner la masse de verre, pendant la fusion, une couche de la composition non fondue se 20 tient a la surface de la masse de verre, la masse fondue s'écoule par une goulotte située sur le fond du four ou à sa promixité immédiate, avant son écoulement, cette masse est réchauffée électriquement et transformée en matière vitreuse stockable, ou utilisable à d'autres fins,
**caractérisée** par le fait que sous la couche froide non fondue de la composition, les composés de soufre sont réduits en soufre ou/en sulfures par les composants réducteurs ajoutés dans la masse/ou par la température minimale de fusion de 1420 °C.
